Europäisches Patentamt

European Patent Office

Office européen des brevets

(19)

(11) EP 0 487 233 B1

(12) EUROPEAN PATENT SPECIFICATION

(45) Date of publication and mention
of the grant of the patent:
20.03.1996 Bulletin 1996/12

(51) Int Cl.⁶: $G02B\ 21/00$

(21) Application number: 91310415.4

(22) Date of filing: 12.11.1991

(54) **Near field scanning optical microscope and applications thereof**

Optisches Nahfeldabtastmikroskop und dessen Anwendungen

Microscope de balayage optique de champ proche et ses applications

(84) Designated Contracting States:
DE FR GB

(30) Priority: 19.11.1990 US 615537
10.10.1991 US 771413

(43) Date of publication of application:
27.05.1992 Bulletin 1992/22

(73) Proprietor: **AT&T Corp.**
**New York, NY 10013-2412 (US)**

(72) Inventors:
  • **Betzig, Robert Eric**
    **Chatham, New Jersey 07928 (US)**
  • **Gyorgy, Ernst Michael**
    **Madison, New Jersey 07940 (US)**
  • **Hellman, Frances**
    **San Diego, California 92130 (US)**
  • **Trautman, Jay Kenneth**
    **Bedminster, New Jersey 07921 (US)**
  • **Wolfe, Raymond**
    **New Providence, New Jersey 07974 (US)**

(74) Representative:
  **Johnston, Kenneth Graham et al**
  **AT&T (UK) LTD.**
  **AT&T Intellectual Property Division**
  **5 Mornington Road**
  **Woodford Green Essex, IG8 OTU (GB)**

(56) References cited:
  **EP-A- 0 426 571          US-A- 4 917 462**

  • **PHYSICAL REVIEW B/CONDENSED MATTER
    vol. 39, no. 1, 1 January 1989, NEW YORK,
    NY,USA pages 767 - 770; R.C.REDDICK ET AL:
    'New form of scanning optical microscopy'**
  • **REVIEW OF SCIENTIFIC INSTUMENTS vol. 61,
    no. 12, December 1990, NEW YORK,NY,USA
    pages 3669-3677; R.C. REDDICK ET AL:
    'Photon scanning tunneling microscopy'**
  • **APPLIED PHYSICS LETTERS vol. 51, no. 25, 21
    December 1987, NEW YORK, NY, USA pages
    2088 - 2090; E. BETZIG ET AL.: 'Collection
    mode near-field scanning optical microscopy'**
  • **JOURNAL OF APPLIED PHYSICS vol. 59, no.
    10, May 1986, WOODBURY, NEW YORK, USA
    pages 3318 - 3327; U. DÜRIG ET AL.: 'Near-field
    optical-scanning microscopy'**
  • **APPLIED PHYSICS LETTERS vol. 49, no. 11, 15
    September 1986, NEW YORK, NY, USA pages
    674 - 676; A. HAROOTUNIAN ET AL.:
    'Super-resolution fluorescence near- field
    scanning optical microscopy'**

EP 0 487 233 B1

## Description

## Field of the Invention

This invention relates to optical microscopes in which a small aperture, typically smaller than an optical wavelength, is positioned within the optical near field of a specimen, i.e., within a distance of less than about an optical wavelength of the specimen, and the aperture is scanned in raster fashion over the surface of the specimen to produce a time-varying optical signal that is detected and reconstructed to produce an image having extremely high resolution. The invention further relates to methods of use of such microscopes for inspecting workpieces in the course of manufacturing processes.

## Art Background

A number of researchers have investigated the use of optical scanning to circumvent the inherent limitations of conventional optical imaging systems. That is, in so-called near-field scanning optical microscopy (NSOM), an aperture having a diameter that is smaller than an optical wavelength is positioned in close proximity to the surface of a specimen, and scanned over the surface. In one scheme, the specimen is reflectively or transmissively illuminated by an external source. A portion of the reflected or transmitted light is collected by the aperture and relayed to a photodetector by, for example, an optical fiber. In an alternate scheme, light is relayed by an optical fiber to the aperture, which itself functions as miniscule light source for reflective or transmissive illumination of the specimen. In that case, conventional means are used to collect and detect the selected or transmitted light. In either case, the detected optical signal is reconstructed to provide image information.

Thus, for example, U.S. Patent No. 4,604,520, issued to W. D. Pohl on August 5, 1986, describes an NSOM system using a probe made from a pyramidal, optically transparent crystal. An opaque metal coating is applied to the crystal. At the apex of the crystal, both the tip of the crystal and the metal coating overlying the tip are removed to create the aperture, which is essentially square and has aside length less than 100 nm.

Also described in U.S. Patent No. 4,604,520 is an alternative aperture made from a single-mode optical fiber. One planar end of the fiber is metallized, and a coaxial hole is formed in the coating so as to just expose the core of the fiber.

In a somewhat different approach, U.S. Patent No. 4,917,462, issued to A.L. Lewis, et al. on April 17, 1990, describes a probe formed from a pipette, i.e., a glass tube that is drawn down to a fine tip and coated with an opaque metal layer. After drawing, the pipette retains a hollow bore, which emerges through both the glass and the overlying metal layer at the tip. The resulting metal annulus defines the aperture. The aperture may be smaller than the bore defined in the glass, as a result of radially inward growth of the metal layer.

A similar probe is described in E. Betzig et al., "Collection Mode Near-Field Scanning Optical Microscopy", Appl. Phys Lett.51 (1987). pages 2088-2090.

One drawback of the above-described methods is that light is transmitted through the probe with relatively low efficiency. As a consequence, signal levels are relatively low. In some cases, apertures must be made larger in order to compensate for low signal levels. This measure is undesirable because it results in lower resolution.

For example, when light is transmitted from a source to the aperture through an uncoated pipette, the optical field has a substantial amplitude at the outer walls of the pipette. In order to confine radiation, it is necessary to coat the walls with metal. However, attentuation occurs as a result of absorption in the metal coating. Moreover, metal coatings are prone to imperfections, such as pinholes, that permit optical leakage. When this tendency is countered by increasing the metal thickness, the length (i.e., the thickness in the axial direction of the pipette) and outer diameter of the metal annulus defining the aperture are also increased. As a result, optical losses due to absorption and evanescence in the metal annulus are increased and the size of the tip is increased. Enlarging the tip makes it more difficult to scan narrow concave topographical features of the specimen while maintaining close proximity to the specimen surface. (Significantly, the problem of excessive tip size due to metal deposition also applies to constant-diameter optical fiber probes of the type having an aperture defined by a hole in a metal layer coating the end of the fiber.)

Problems that occur when the probe is a single-mode fiber having a sharpened (e.g., by etching) conical tip and no metal coating are described, e.g., in C. Girard and M. Spajer, "Model for reflection near field optical microscopy," Applied Optics, 29 (1990) pp. 3726-3733. One problem is that a portion of the light passing through the fiber toward the tip may be reflected by, and then transmitted through, the sides of the conical taper. A second problem is that the sides of the taper may capture undesired optical signals that can propagate through the fiber, resulting in an increased noise level at the detector.

R.C. Reddick, et al., "New Form of Scanning Optical Microscopy," Phys. Rev. B 39 (1989), pages 767-770, describes an optical fiber probe sharpened by chemical etching. This probe was to be used in conjunction with a prism, which created an evanescent optical field. Illustrative images made by a prototype instrument using such a combination of probe and prism using 633-nm light and a 1-µm probe tip exhibited 200-nm resolution.

In view of the foregoing discussion, it is apparent that investigators have hitherto been unsuccessful in providing an NSOM probe that combines efficient transmission of light (i.e., transmission that is relatively free of attenuation due to optical interactions with the walls of the probe) with relatively small tip dimensions, high resolution, and high reliability.

According to the present invention, there is provided a system as defined in claim 1, or a method as defined in claim 13 or 17.

In one aspect, the invention involves an optical system, comprising: a probe, at least a portion of which is optically transmissive at least at a given wavelength, the probe having a distal end; an optical aperture defined in the distal end, the aperture having a diameter smaller than the given wavelength; means for optically coupling a light source to the probe such that at least some light emitted by the source, at least at the given wavelength, enters or exits the probe through the aperture; and means for displacing the probe relative to an object, characterized in that: (a) the probe comprises a portion of a single-mode optical fiber having a core and a cladding, the cladding having an outer surface, there being associated with the fiber a guided dielectric mode; (b) the fiber has a taper region that is adiabatically tapered, at least a portion of the taper region being capable of guiding light of at least the given wavelength; (c) the taper region terminates in a substantially flat end face oriented in a plane substantially perpendicular to the fiber, the aperture being defined in the end face; (d) the cladding outer surface in the taper regions substantially smooth; (e) at least a portion of the cladding outer surface in the taper region is coated with metal, defining a metallic waveguide portion capable of guiding a metallic mode, there further being defined a cutoff diameter for the metallic mode: and (f) the end face diameter is less than or equal to the cutoff diameter.

## Brief Description of the Drawing

FIG. 1 is a schematic drawing of an exemplary optical system useful for near-field scanning optical microscopy.

FIG. 2 is a schematic drawing of an alternative, exemplary optical system useful for near-field scanning optical microscopy.

FIG. 3 is a schematic drawing of a prior-art optical fiber probe.

FIG. 4 is a schematic drawing of a prior-art optical fiber probe.

FIG. 5 is a schematic drawing of an optical fiber probe according to one inventive embodiment.

FIG. 6 depicts an exemplary method for metallizing an optical fiber probe.

FIG. 7 is a schematic depiction of an optical aperture according to one inventive embodiment.

FIG. 8 is a schematic depiction of an alternative optical aperture.

FIG. 9 is a flowchart illustrating a manufacturing process according to one inventive embodiment.

## Detailed Description

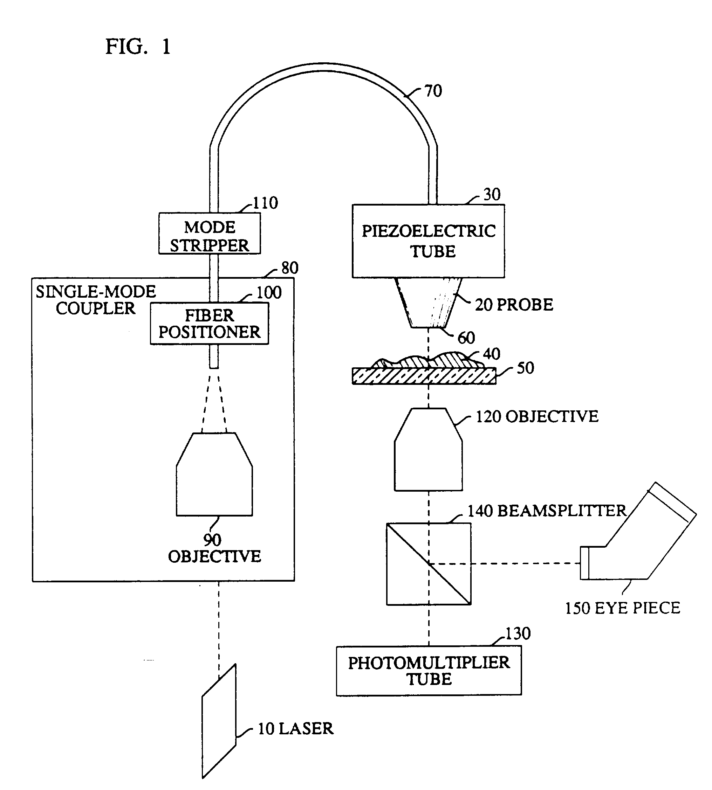

In one embodiment, the invention involves an optical system. Turning to FIG. 1, such an optical system includes a light source 10, a probe 20, displacement means 30 for displacing the probe relative to an object 40 disposed, exemplarily on a stage 50, adjacent the probe tip 60. The optical system further comprises means for optically coupling light source 10 to probe 20. In the example illustrated in FIG. 1, the optical coupling is provided by a single-mode optical fiber 70 extending between light source 10 and probe 20. (Fiber 70 may, in fact, be integral with probe 20.) Light source 10 is exemplarily a laser. Light from source 10 is readily injected into the optical fiber by way, e.g., of a single-mode coupler 80, which includes a microscope objective 90 and a fiber positioner 100. A mode stripper 110 is also optionally included in order to insure that only the single mode in the core is propagated to the probe, and not other modes in the cladding. The displacement means 30 may, for example, be a piezoelectric tube adapted for moving the probe vertically as well as in two orthogonal lateral dimensions. Alternatively, the displacement means may be mechanical or piezoelectric means for moving the stage rather than the probe, or some combination of stage-displacement and probe-displacement means.

One possible use for an optical system as described is for direct writing. That is, the sample surface proximate the probe tip may be coated with a photosensitive layer that is capable of being exposed by light emitted from the light source. An exposure pattern is created in the photosensitive layer by displacing the probe relative to the sample, while light from the light source is continuously or intermittently emitted from the probe tip.

A second possible use for an optical system as described is for imaging of the sample in a so-called "illumination" mode. According to this application, light from the probe tip is transmitted through the sample and collected below the stage (as shown in FIG. 1) by microscope objective 120. (Illustrated is an illumination-transmission mode; an illumination-reflection mode is also readily practiced.) The collected light is directed into detector 130, which is exemplarily a photomultiplier tube. For visual positioning of the probe, it is also desirable to include a beamsplitter 140, which directs a portion of the collected light into an eyepiece 150. Significantly, when the sample is scanned by a raster-like displacement of the probe, the signals from detector 130 can be reconstructed to produce an image of the sample portion that has been scanned. Such scanning methods are employed in near-field scanning optical microscopy (NSOM), in which the probe tip is brought to within a very small distance of the sample surface, typically less than a wavelength of the light emitted by the light source. NSOM provides very high optical resolution by also employing an aperture in the probe tip that is very small, also typically less than one wavelength. NSOM apparatus is well-known in the art, and is described, for example, in U.S. Patent No. 4,604,520, issued to W. D. Pohl on August 5, 1986, and in U.S. Patent No. 4,917,462, issued to A. Lewis, et al. on April 17, 1990.

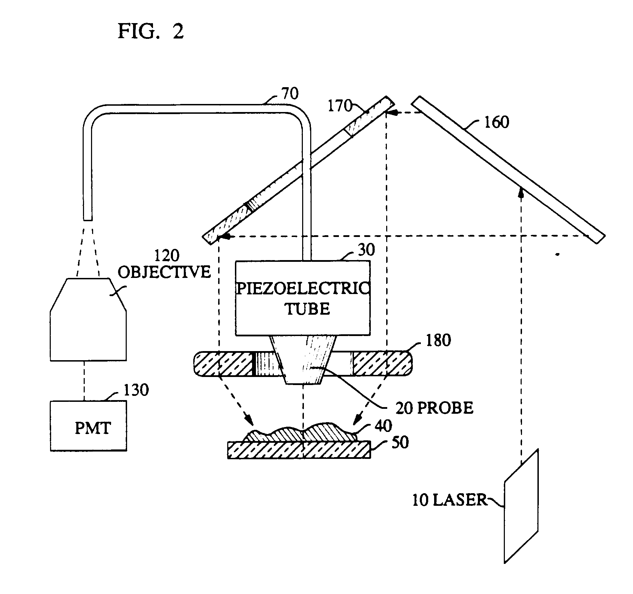

Yet a third possible use for an optical system as described is shown in FIG. 2. In the arrangement of FIG. 2, the probe tip serves as a collector of light rather than as an emitter of light. Such an arrangement is useful, e.g., for NSOM imaging in a so-called "collection" mode. (Illustrated is a collection-reflection mode. A collection-transmission mode is also readily practiced.) Light from light source 10 is directed via tilted mirror 160 and tilted annular mirror 170 to annular objective lens 180. Lens 180 focuses the light onto the sample surface. Light reflected or emitted from the surface is collected by the probe tip and directed via fiber 70 and objective 120 to detector 130. Reflection mode NSOM is described, for example, in U.S. Patent No. 4,917,462, cited above.

The detector (or, more generally, the transducer) 130 converts the detected light to electrical signals. These signals are readily used to create a two-dimensional image on a video display device such as a cathode-ray tube. For such purpose, a scan generator is used to control the displacement of the probe relative to the object and to provide a reference signal for constructing the displayed image. The electrical signals generated by transducer 130 are typically analog signals. These are optionally converted to digital signals before they are displayed. In such a case, a digital memory is optionally provided for storing the digitized signals, and a digital processor is optionally provided to process the digitized signals (for, e.g., image enhancement) before they are displayed.

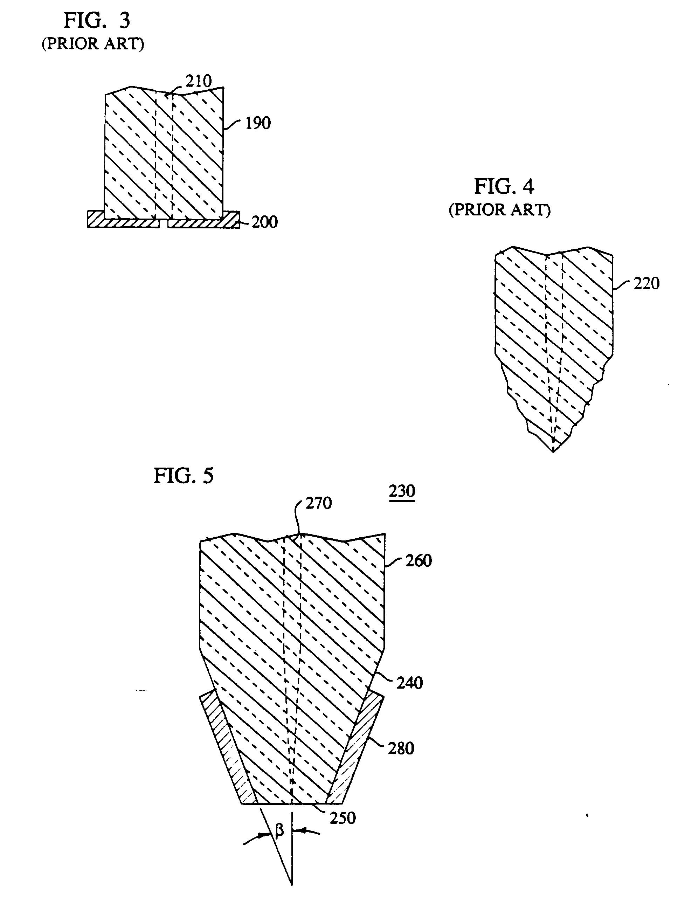

One possible form of probe 20 is a single-mode optical fiber. Optical fiber probes have, in fact, been disclosed in the prior art. FIGs. 3 and 4 show examples of such fiber probes. FIG. 3 shows an untapered, single-mode optical fiber 190, having an annular cap of opaque material, such as metal, deposited so as to cover the tip. The orifice 210 at the center of the annulus defines the optical aperture of the probe. FIG. 4 shows a bare optical fiber 220 that is tapered, for example by chemical etching.

We have discovered that an improved probe 230 is readily made by heating a single-mode optical fiber to soften it, and drawing the softened fiber to form a tapered fiber. After drawing, at least a portion of the tapered fiber must be coated with an opaque material 280, exemplarily metal. With reference to FIG. 5, the tip 240 of such a drawn fiber is tapered at an angle $\beta$, and terminates in an end flat 250.

The optical fiber comprises a cladding 260 and a core 270. Although specific cladding and core compositions are not essential to the invention, an exemplary cladding composition is fused silica, and an exemplary core composition is doped, fused silica having a higher refractive index than the cladding. Although specific cladding and core dimensions are also not essential to the invention, an exemplary core diameter is about 3 $\mu$m, and an exemplary cladding outer diameter is about 125 $\mu$m. One guided mode, the fundamental or $HE_{11}$ mode, is associated with a corresponding single-mode fiber that has not been tapered. Such a mode is characteristic of a cylindrical dielectric waveguide, and for that reason is hereafter referred to as a dielectric mode.

When an optical fiber is tapered by heating and drawing, both the core diameter and the cladding outer diameter are decreased. The fractional change in the core diameter is approximately equal to the fractional change in the cladding outer diameter. (In other words, the cross section of the fiber changes in scale only.) Significantly, the angle at which the core is tapered is substantially smaller than $\beta$. For example, in a linearly tapered fiber having the exemplary dimensions, the tangent of the core taper angle is only 3/125, or 2.4%, times the tangent of taper angle $\beta$. For this reason, even for relatively large values of $\beta$, for example values of 30° or even more, the core will have an adiabatic taper, as discussed below.

In the untapered fiber, the electric field of the dielectric mode is largely confined to the core, and it falls to a very small amplitude, typically less than $10^{-10}$ times the peak amplitude, near the cladding outer surface. That is not necessarily the case in a tapered fiber. As a guided light wave propagates into the taper region, it encounters a progressively narrowing core. Eventually, the core becomes too small to substantially confine the guided mode. Instead, the light wave is guided by the interface between the cladding and the surrounding material, which may be air, or a metal such as aluminum. As discussed above, the core will generally be tapered at a small enough angle for the mode to be adiabatic. By adiabatic is meant that substantially all of the energy of the initial $HE_{11}$ mode remains concentrated in a single mode, and is not coupled into other modes, particularly radiation modes, which are capable of causing optical losses by radiation.

Initially, the guided mode that escapes from the core substantially retains the properties of a $HE_{11}$ mode. In particular, the amplitude of the guided electromagnetic field is relatively small at the cladding outer surface. However, as the fiber diameter continues to decrease, the field amplitude at the cladding outer surface increases relative to the peak amplitude within the fiber. Eventually, the field attains a relatively large amplitude at the cladding outer surface. Such a mode could be guided, for example, by the interface between the cladding and surrounding air. However, such an arrangement is undesirable.

Because the electric field extends significantly outside of the cladding, a significant amount of optical leakage can be expected. This is undesirable because it reduces the efficiency with which light is channeled both to and from the probe tip. Moreover, light leaking from the cladding walls can ultimately fall up on portions of the sample lying relatively far from the probe tip, resulting in unintended exposure of the sample, or in increased background levels at the detector. Furthermore, if the cladding outer walls are surrounded only by air, stray light can enter the fiber, again resulting in increased back ground levels at the detector (if, for example, the probe is being used to collect light from the sample).

For the above reasons, it is desirable to coat at least the terminal portion of the taper, from which optical leakage is a significant factor, with an opaque material, exemplarily a metal such as aluminum. Significantly, the guided mode in such a metallized portion has characteristics typical of a guided mode in a metal, rather than a dielectric, waveguide. Thus, for example, an initial $HE_{11}$ dielectric mode may be converted to a $TE_{11}$ metallic mode as it approaches and enters the metallized region. Significantly, in a waveguide having an adiabatically tapered core, the $HE_{11}$ mode can couple with relatively high efficiency (typically, greater than 10% efficiency) to the $TE_{11}$ mode. That portion of the fiber in which, if the fiber were bare, the guided mode would have a significant amplitude at the fiber outer surface, but would still retain substantial $HE_{11}$ character is here referred to as the "transition region." In view of the foregoing discussion, it is clearly desirable (although not absolutely required) to metal-coat the fiber throughout the transition region, and from the transition region to the distal end of the fiber. It should be noted in this regard that where a significant amount of optical energy is present in radiation modes, relatively thick metal coatings are required in order to substantially eliminate the possibility of pinhole leaks and, in view of the finite conductivity of any actual coating, the possibility of penetration of the metal by the electromagnetic field. This is undesirable both because the coating thickness may hinder extremely close approach of the probe tip to the sample, and because very thick metal coatings may develop granularity that tends to promote, rather than inhibit, the occurrence of pinhole leaks. By contrast, it is generally expected here that relatively little energy will couple into radiation modes, and therefore relatively thin metal coatings, typically 750-1500 Å $(1 Å = 0.1 nm)$, and preferably less than about 1250 Å will generally suffice.

Generally, the guided metallic mode will initially be a propagating mode. However, as the fiber diameter continues to decrease, the guided mode may eventually be transformed to an evanescent mode exhibiting relatively strong attenuation in the propagation direction. Such a transition may be associated with a characteristic quantity here referred to as the "cutoff diameter." The cutoff diameter is the cladding outer diameter of a given tapered waveguide at which the transition from a propagating to an evanescent mode would occur if the waveguide were coated with an infinitely conductive metal. Generally, for the $TE_{11}$ mode, the cutoff diameter is roughly equal to one-half the guided wavelength. That portion of the fiber extending from the cutoff diameter to the probe tip is here referred to as the "evanescent region."

The cutoff diameter of a $TE_{11}$ mode in, e.g., a circularly cylindrical waveguide is readily predicted from the theory of metallic waveguides as discussed, for example, in J. D. Jackson, <u>Classical</u> <u>Electrodynamics,</u> 2d Edition, John Wiley and Sons, Inc., New York, 1975, p.

356. It is equal to the quantity $\chi / k_0 n$, where $k_0$ is the free-space wavenumber of the guided light, n is the refractive index of the waveguide (with reference to the guided mode and wavelength), and $\chi$ is a quantity related to the specific mode that is guided. For a $TE_{11}$ mode, $\chi$ is equal to 1.841. Values of $\chi$ corresponding to other guided modes will be readily apparent to the ordinarily skilled practitioner.

It should be noted in this regard that the transformation of the fundamental dielectric mode to the $TE_{11}$ metallic mode may be incomplete. Some finite portion of the energy of the dielectric mode may be coupled into metallic modes other than the $TE_{11}$ metallic mode. However, the $TE_{11}$ mode generally experiences less attenuation, in the evanescent region, than any of the other metallic modes. For that reason, a light wave that has traversed the evanescent region substantially contains only the $TE_{11}$ metallic mode. (It should further be noted that because of the finite conductivity of actual metal coatings, a perturbed $TE_{11}$ mode is expected; i.e., a mode in which the electric field has a small longitudinal component.)

Because substantial attenuation takes place in the evanescent region, it is desirable to make that region as short as possible. However, other factors, to be discussed below, may militate for differing evanescent lengths in differing applications.

It is desirable for the cladding outer surface in the tapered portion of the fiber to be substantially smooth in order to reduce scattering of light from the $HE_{11}$ mode near the cladding outer surface, and in order to receive a metal coating that is relatively thin (preferably, less than about 1500 Å thick) and also substantially free of defects capable of leaking optical radiation. A cladding surface is here considered to be substantially smooth if no surface texture is apparent on a scale of more than about 50 Å as observed in a scanning electron micrograph (SEM). Surfaces of such desirable smoothness are readily produced by heating and drawing the fiber.

It is desirable for the end flat to be substantially planar, and to be oriented substantially perpendicular to the axial direction of the fiber. The end flat is here considered to be substantially planar if, over the surface of the end flat, examination by SEM reveals no deviation from planarity greater than about 100 Å by any feature of any lateral extent.

It is desirable for the edges of the end flat to be relatively sharply defined. The edges are here considered to be sharply defined if examination by SEM reveals an average radius of curvature, at the edge, of less than about 100 Å. End flats of such desirable planarity, and having edges of such desirable sharpness, are also readily produced by heating and drawing the fiber.

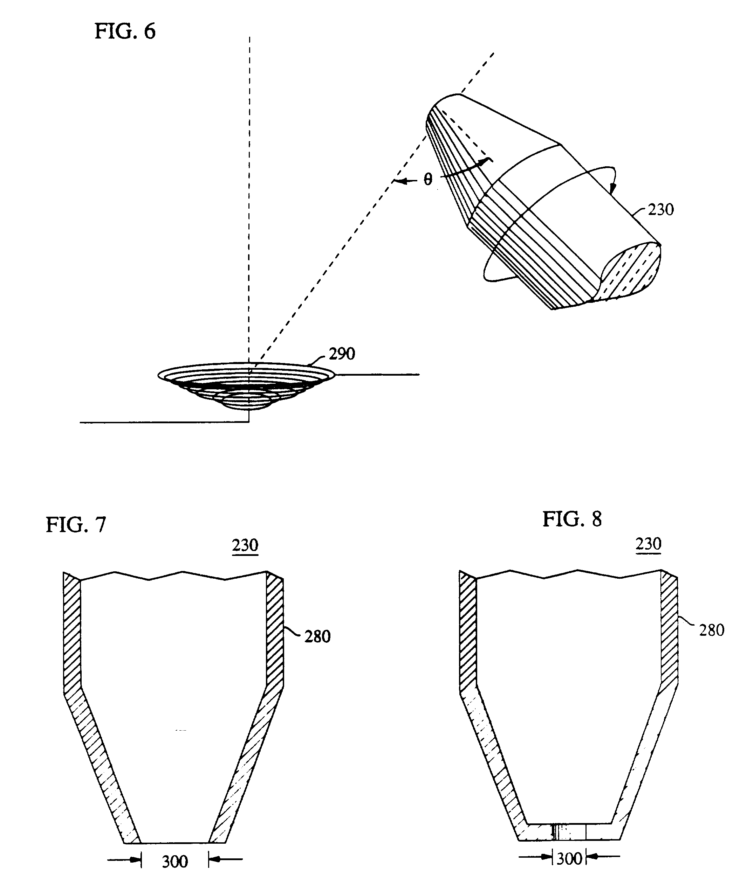

One method for metal-coating the terminal portion of the fiber (preferably including at least the transition region, as noted above) involves the use of an evaporation source of, e.g., aluminum. As shown in FIG. 6, the fiber 230 is not oriented end-on toward the source 290 during evaporation and deposition of the aluminum. Instead, the probe end of the fiber is pointed away from the source, such that the end flat lies in a shadow relative to the direction of incidence of the -bombarding metal. Typically, the fiber axis is inclined at an angle θ of about 75° relative to a line drawn from the source to the fiber tip. During deposition, the fiber is rotated about its own axis in order to uniformly coat all sides of the fiber. When such a method is employed, a coating is readily produced that smoothly covers the cladding outer surface, but leaves the end flat substantially bare of any metal. With reference to FIG. 7, the above-described method is useful for producing a probe in which the optical aperture 300 corresponds to the entire surface of the end flat. Because the spatial resolution of the probe is determined mainly by the aperture diameter, it is desirable, for high-resolution applications, to make the end flat diameter quite small. Thus, the end flat diameter in such a probe would generally be made smaller than the cutoff diameter. For example, the cutoff diameter for 5145 Å light from an argon ion laser is typically about 2000 Å in a fiber of the exemplary dimensions discussed above. A typical, corresponding end flat diameter is about 500 - 1000 Å, and end flats as small as about 200 Å, or even smaller, are readily made by heating and drawing the fiber. In general, the average thickness of the aluminum layer is preferably not less than about 750 Å, because substantially thinner layers may be subject to excessive optical leakage. (If the probe is used for both illuminating the object and collecting light from the object, an even smaller thickness may be acceptable.) The thickness is preferably not greater than about 1500 Å, because it is desirable to minimize the total diameter of the probe tip and to make the coating as smooth as possible. The total diameter is the sum of the end flat diameter and the metal thicknesses bounding the end flat at diametrically opposite positions. It is desirable to minimize this total diameter in order to provide a probe tip that can be inserted within relatively narrow cavities or crevices in the sample surface, and that can, more generally, penetrate as deeply as possible into the near field of the sample.

Significantly, a probe of the above-described type has an evanescent region extending from the cutoff diameter to the end flat. Such an evanescent region is relatively long, by comparison to an alternate design to be described below. For example, with a cutoff diameter of 2000 Å, an end flat diameter of 500 Å, and a taper angle of 15°, the evanescent length is 5600 Å. In such a distance, a significant amount of attenuation may take place. Consideration of the attenuation militates for making the taper angle as large as is feasible in order to shorten the evanescent length. However, it must also be considered that a narrower taper angle makes it easier to penetrate crevices and to approach step-like surface features more closely.

According to a preferred method for tapering the fiber, the fiber is first mounted in a commercial pipette puller. The fiber is heated prior to and during drawing. An exemplary heat source is a carbon dioxide laser. The fiber is drawn until it breaks. Controllable parameters include the incident illumination intensity (which determines the heating rate), the pulling force applied to the fiber ends, and the number of individual pulling steps that are applied. Generally, the fiber is finally broken by a "hard pull," that is, a pulling step conducted with sharply increased force. The velocity of the fiber ends at the moment of application of the hard pull is also controllable, as is the time delay between cessation of heating and application of the hard pull.

We have discovered that a given set of process parameters produces probes having highly reproducible characteristics. The taper angle is readily increased by any selection or combination of reducing the heating rate, reducing the pulling force, pulling in multiple steps, or reducing the extent of the heated region. The end flat diameter is readily increased by increasing the heating rate, or increasing the pulling force, or both. In addition, the use of a fiber having a higher temperature glass composition provides a bigger taper angle and a smaller tip. Desirable combinations of process parameters will be readily apparent to the ordinarily skilled practitioner after minimal experimentation.

An alternative type of probe is illustrated in FIG. 8. In this type of probe, the metal coating is deposited over the end flat as well as on the cladding outer surface. As discussed above, the metal thickness on the cladding outer surface is desirably about 750-1500 Å thick. The metal layer overlying the end flat is desirably about 250 - 500 Å thick because it needs to be thick enough to substantially eliminate stray light, but also as thin as practicable in order to minimize the evanescent length. The optical aperture 300 in this case corresponds, not to the entire end flat, but only to a portion of the end flat. The metal layer overlying the end flat is formed into an annulus having an opening which defines the optical aperture. Significantly, the opening may be centrally located on the end flat, or, alternatively, it may be displaced from the center of the flat. A non-central aperture may be desirable where multiple modes are expected to be present in the tip region. Because not all modes will couple efficiently to a centrally located aperture, a non-central aperture in such a case may provide more efficient output coupling. In particular, a non-central aperture is expected to give the optimal output coupling for the $TE_{11}$ mode.

The central opening is formed, for example, by initially providing a fiber that incorporates an embedded rod of glass that is more rapidly etched than the host glass of the fiber. (An example is borosilicate glass embedded in fused silica.) The end of the fiber is exposed to a chemical etchant after pulling but before the fiber is metallized. The etchant produces a cavity in the end flat. The cavity is shadowed during metallization of the end flat, resulting in an opening in the metal layer.

A typical aperture made by this method is about 200 - 2000 Å in diameter, and the same method is readily employed to form apertures even larger or smaller.

The metal coating is exemplarily deposited from an evaporation source, as discussed above in connection with the bare-tipped probe. However, two separate deposition steps are employed: one for coating the the cladding outer surface, as described above, and a second step at a different fiber orientation for coating the end flat.

Because in this type of probe, the aperture is not determined by the end flat diameter, it is not generally necessary for the end flat diameter to be smaller than the cutoff diameter, even for high-resolution applications. Accordingly, in order to minimize attenuation, it is desirable for the end flat diameter to be, approximately, at least the cutoff diameter. However, as discussed above, it is desirable to minimize the total probe tip diameter in order to be able to penetrate crevices. For this reason, the end flat diameter is preferably also not substantially greater than the cutoff diameter.

It should be noted in this regard that the aperture diameter is generally smaller than the cutoff diameter, and therefore the central opening in the metal layer overlying the end flat defines a metallic waveguide in which the optical field is evanescent. However, because the coating is typically only about 500 Å thick or less, the evanescent length is much smaller than it is in the case of the bare-tipped probe discussed previously. Clearly, in order to minimize attenuation, it is desirable to make the metal coating on the end flat as thin as is practicable. An acceptable range for metal thicknesses on the end flat is about 250-500 Å, and, as noted, 500 Å is typical.

We have calculated the ideal power attenuation expected in the evanescent portion of a bare-tipped probe. The corresponding power transmission coefficient is conveniently expressed in terms of $\chi$, which, as noted above, is a characteristic of the guided mode, the taper angle $\beta$, and a dimensionless parameter $\alpha$, which is defined by

$$\alpha = \chi/nk_0a,$$

where a is the aperture diameter, and as noted above, $k_0$ is the free-space wavenumber of the guided light, and n is the relevant value of the waveguide refractive index. It is helpful to note that $\alpha$ is equal to the ratio of the cutoff diameter to the aperture diameter. When expressed in decibels, the power transmission coefficient corresponding to ideal evanescent attenuation is given by:

$$T_{ev} \text{ (db)} = 8.68 \, (\chi/\tan\beta) \left[ \frac{\sqrt{\alpha^2 - 1}}{\alpha} - 1n \, (\alpha + \sqrt{\alpha^2 - 1}) \right]$$

We have succeeded in making probes, having various values of $\alpha$ ranging between 1 and 10, and various values of $\beta$ ranging between 5° and 20°, in which the overall measured power transmission coefficient falls below $T_{ev}$ by no more than 10 dB.

At least for values of $\alpha$ ranging between 2 and 8, $T_{ev}$ may be roughly approximated by $-2\chi\alpha/\tan\beta$ dB. Accordingly, we have succeeded in making probes for which the overall measured power transmission coefficient, denoted T, satisfies

$$T \text{ (db)} > -(2\chi\alpha/\tan\beta) - 10.$$

The inventive optical system is useful, inter alia, as a manufacturing tool. For example, the probe is readily used to conduct actinic radiation from a light source to a small region of a workpiece surface situated adjacent the optical aperture of the probe. Thus, for example, a workpiece surface may be coated with a photosensitive layer such as a photoresist, and a pattern formed in the layer by moving the probe relative to the layer while transmitting light through the probe such that light exits the aperture and falls on the layer, thereby exposing the layer. Additional steps are then readily performed, leading, for example, to the completion of an article of manufacture. Exemplarily, the article of manufacture is a semiconductor integrated circuit, and the additional steps include developing the photoresist and subjecting the resist-coated surface to an etchant such that a layer underlying the photoresist is patterned. Significantly, not only semiconductor wafers, but also glass plates intended for use as photolithographic masks, are readily patterned in this fashion.

In an alternative process, actinic radiation from the probe is readily directed to a workpiece surface in order to cause deposition of material on the surface. For example, the surface may be exposed to an organometallic vapor or solution. Actinic radiation impinging on the surface may excite local decomposition of one or more constituents of the vapor or solution, producing, e.g., a metallic residue that adheres to the surface.

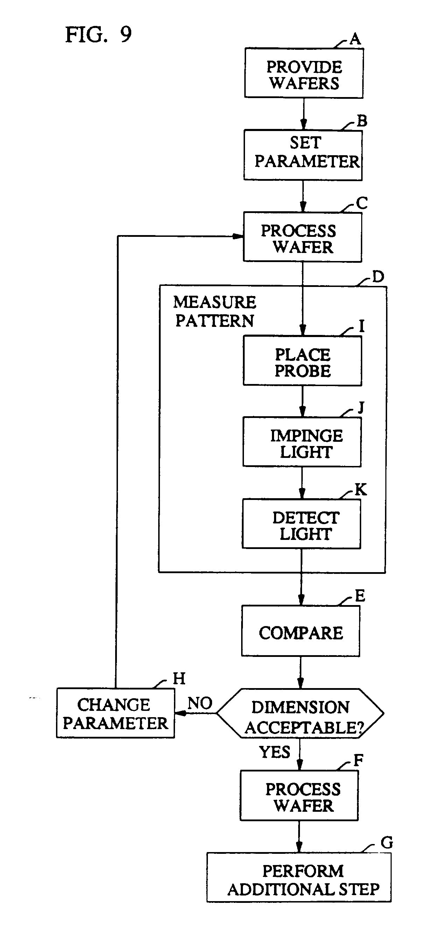

The inventive optical system is also useful as an inspection device on a manufacturing line. For example, with reference to FIG. 9, in the manufacture of semiconductor integrated circuits, a semiconductor wafer is often provided (Step A), having a surface that is patterned at one or more stages of the manufacturing process. The patterns that are formed have characteristic dimensions, sometimes referred to as "line widths," that must generally be kept within close tolerances. The inventive optical system is readily used for measuring (Step D) line widths, such as the width of metallic conductors on a wafer, or the length of gates formed in metal-oxide-semiconductor (MOS) structures on a wafer. Such line widths can then be compared (Step E) with desired values. Process parameters, exemplarily lithographic exposure times or etching times, which have been initially set (Step B) are readily adjusted (Step H) to bring the measured dimensions within the desired tolerances. Additional steps (Step G) toward completion of a manufactured article are then performed. The measuring step includes situating the probe adjacent the patterned surface (Step I) and impinging (Step J) light upon, and detecting (Step K) light from the surface such that the light source and detector are optically coupled via the inventive probe, which is substantially as described above.

The inventive optical system is also useful for inspecting bit patterns in magnetic digital storage media such as magnetic disks. Because magnetic storage media generally exhibit a Faraday rotation of polarized light, the bit patterns, which are characterized by modulated magnetization directions, are readily visualized by inspection using, e.g., crossed polarizers. Thus for example, the inventive optical system may be used for reflection-mode imaging of the medium, using a polarized light source and including a polarizing filter in front of the detector. In a manufacturing process that involves impressing such media with bit patterns having predetermined properties, relevant process parameters may be adjusted to bring the detected bit patterns into conformity with the desired patterns.

In at least some cases, the laser light source is itself a source of polarized light. In other cases, it may be desirable to pass light from the source through a linearly polarizing film. Before such light is coupled into optical fiber 70 (see FIG. 1), it is often useful to pass it through a half-wave plate and then a quarter-wave plate. The orientations of these plates are readily adjusted in order to compensate for birefringence in the optical fiber. (A polarization preserving fiber may be useful, but is not necessary.) The linearly polarized component of light emerging from the fiber is optimized by, e.g., visually detecting it through a second linearly polarizing film while adjusting the half-wave and quarter-wave plates.

Other applications of the inventive optical system for manufacturing and inspection will be readily apparent to the skilled practitioner.

For example, the inventive optical system is also useful for impressing digital data for storage on an optical or magnetic storage medium, and for reading such stored data from the storage medium. For example, it is well known that data can be recorded on magnetizeable metallic films in the form of patterns of spots having local magnetization that differs in direction from the magnetization of surrounding film portions. This data storage technology is described, for example, in R.J. Gambino, "Optical Storage Disk Technology," MRS Bulletin 15 (April 1990) pp. 20-24, and in F.J.A.M. Greidanus and W.B. Zeper, "Magneto-Optical Storage Materials," MRS Bulletin 15 (April 1990) pp. 31-39.

A typical magnetic storage medium is a layer which comprises an amorphous alloy of one or more of the rare-earths and one or more of the transition metals. (Alternative magnetic storage materials include cobalt-platinum or cobalt-palladium multilayer films, and magnetic oxide materials such as ferrites and garnets.) A spot representing, e.g., a bit of digital data, is written by exposing the medium to a magnetic field and optically heating the spot area above the Curie temperature or above the compensation point of the medium. (In some cases, the internal demagnetizing field of the medium is sufficient to cause local reversal of magnetization, and an external field need not be applied.) Such spots are conventionally made about 1 μm in diameter. However, the inventive optical system is readily employed to make smaller spots, exemplarily spots having diameters of about 0.2 - 0.5 μm, and even as small as 0.06 μm or less. Such smaller spots can also be read by the inventive optical system.

In a currently preferred embodiment, the magnetic storage medium is a thin, amorphous film of an alloy comprising at least one rare earth and at least one transition metal. An exemplary such alloy is terbium-iron. The aperture of the near-field probe is situated less than about one illumination wavelength from the surface of the medium. (If larger spots are desired, the probe is readily positioned more than one wavelength from the medium.) The illumination wavelength is selected to give adequate heating to the medium. For example, a terbium-iron film is readily heated by a dye laser which is pumped by a YAG laser and emits roughly nanosecond pulses at a wavelength of roughly 600 nm. Light from the laser is directed into the inventive probe via an optical fiber, and is impinged from the probe tip onto the recording medium. A typical, local temperature change required to write a spot is about 150°C. Although writing can be achieved using either a continuous or pulsed laser for illumination, a pulsed laser is preferable in order to relax the average power requirements of the laser while heating a relatively small spot.

Significantly, the invention is intended to encompass not only magnetic film recording media, but also other media that are capable of being written by an illumination source. Such media include, for example, polycrystalline films (of, e.g., tellurium-doped indium antimonide) that are locally heated to, e.g., a temperature which exceeds the melting point of the film by a laser pulse and rapidly quenched to an amorphous state. The cooling rate can be influenced by, e.g., appropriately shaping the time dependence of the laser pulse.

Spots representing recorded data are typically written in a track in the recording medium. Such a track extends, e.g., circumferentially on a rotating disk. The diameters of spots written in accordance with the instant invention are typically much smaller than the width of such a track. Accordingly, multiple such spots are advantageously written in bands extending substantially transversely across the track. One advantage of the invention is that the spots in such bands can be read simultaneously by a linear array of inventive near-field probes.

In a currently preferred method of reading a pattern impressed on a magnetic film recording medium, linearly polarized light emitted by the inventive probe is transmitted through the medium, and conventional means are used to collect a portion of such transmitted light and to polarization analyze it. For reading, preferred wavelengths are those having a maximal optical response (i.e., maximal rotation of the direction of polarization of the light as it traverses the magnetic medium). For transition-metal-rare-earth media, such wavelengths will typically lie in the near-infrared or visible spectrum.

In an alternate embodiment, the probe is used both to impinge polarized light onto the surface of the medium, and to collect a portion of such light that is reflected from the surface. As a result of either transmission through, or reflection from, a magnetized spot in the medium, a polarization rotation of, typically, about 0.5° is produced.

The effect of such rotation is to modulate the intensity of light transmitted through an analyzer and subsequently detected. Such modulation is readily decoded to reproduce the information recorded in the medium. As is well known, such information may, for example, be recorded sound, images, text, or digital data.

In alternate embodiments, such as those involving phase changes, modulation is typically provided by changes in reflectivity, rather than by polarization rotation. Such changes are also readily detectable using the inventive probe to collect reflected light.

The inventive microscope is also advantageously employed for imaging applications in biological research and clinical medicine. In particular, the inventive microscope overcomes, in at least some cases, the problem of low signal level that often detracts from the usefulness of prior-art NSOM systems for medical and biological imaging. Thus, for example, the inventive microscope is readily used to image sectioned samples of biological tissue in order to find and identify physical pathologies in the tissue. In a similar manner, the inventive microscope is readily used to examine the distribution in sectioned tissue samples of materials that are detectable by their inherent appearance or fluorescence, as well as materials that are labeled by, e.g., fluorescent dyes.

The inventive microscope is also useful, in genetic clinical and research applications, for imaging chromosomes while they are in, e.g., the metaphase state. In particular, chromosomes or portions of chromosomes that are labeled with fluorescent material are readily identified using the inventive microscope. Methods of fluorescent labeling, which generally involve reacting cell nuclear material with material that includes fluorophores, are well-known in the art and need not be described in detail herein.

Fluorescent imaging is readily achieved using the microscope in either an illumination mode (FIG. 1) or a collection mode (FIG. 2). In the former, electromagnetic radiation capable of inducing the sample to emit fluorescent light impinges on the sample from the probe and the resulting fluorescence is collected by, e.g., a conventional microscope objective. In the latter, the exciting radiation is conventionally impinged on the sample, and the fluorescent light is collected by the probe.

As noted, a preferred probe 20 (see FIG. 1) is made by tapering a single-mode optical fiber. It should be noted that in at least some cases a useful probe can also be made by tapering and coating a multiple mode fiber. Depending on the dimensions of a multiple mode fiber (relative to the guided wavelength), a greater or lesser number of modes will be guided. In general, it is expected that the fewer the number of guided modes (i.e., the more closely the fiber resembles a single-mode fiber), the greater will be the signal-to-noise ratio achieved for a given aperture.

Also as noted, an exemplary opaque coating for the probe is a metal such as aluminum. More generally, an appropriate coating is one consisting of a material in which the guided radiation has a low penetration (skin) depth. Aluminum is a preferred material when the radiation lies in, e.g., the visible spectrum, but semiconductors such as silicon may be preferable where, e.g., ultraviolet radiation is to be guided.

## EXAMPLE

A 3-$\mu$m, single-mode fiber (FS-VS-2211) having a 450 nm cutoff, was drawn in a Mod. P-87 micropipette puller manufactured by Sutter Instruments, while heating the fiber with a 25-watt, 3-mm spot from a 25-watt carbon dioxide laser. The micropipette puller was programmed to provide a hard pull at a setting of 75 (range 0 - 255), a "velocity at pull" at a setting of 4 (range 0 - 255), and a time delay of 1 (range 0 - 255). The tip properties that were obtained were: a 12° taper angle, a 670-Å-diameter end flat, and a value for of of about 3. One fiber end was placed in a rotator and evaporation coated with about 1260 Å of aluminum at a base pressure of about $10^{-6}$ torr. The tapered end was then mounted in a piezoelectric tube in the optical arrangement of FIG. 1. One milliwatt of 514.5-nm light from an argon ion laser was coupled into the fiber. The optical power output at the fiber tip was measured to be about 1.1 nanowatt, corresponding to an overall power transmission coefficient of about -60 dB. When used to form an image of a sample surface, the probe provided a spatial resolution of about 25 nm.

## Claims

1. An optical system, comprising:

a probe (20), at least a portion of which is optically transmissive at least at a given wavelength, the probe having a distal end in which there is defined an optical aperture (60) smaller in diameter than the given wavelength; and means (30) for displacing the probe relative to an object,
CHARACTERIZED IN THAT:

a) the probe comprises a portion of an optical fiber having a core (270) and a cladding (260), wherein the fiber has a taper region (240), having a taper angle, in which the cladding has a substantially smooth outer surface, the taper region terminates in a substantially flat end face (230), and the aperture is defined in the end face;
b) at least a portion of the taper region is overcoated with an opaque material (280) such that electromagnetic radiation of the given wavelength will assume the electrical field distribution characteristic of at least a first guided mode of metal waveguides, such a mode to be refered to as a metallic mode, wherein the first metallic mode has associated therewith a cutoff cladding diameter at which the first metallic mode will theoretically change from a propagating to an evanescent mode if the opaque material is an infinitely conductive metal;

c) the cladding outer diameter decreases, through the taper region, at such a rate that guided electromagnetic radiation of the given wavelength that is initially in a dielectric mode characteristic of a cylindrical dielectric waveguide will couple with at least 10% efficiency to the first metallic mode; and

d) the end face has a diameter that is less than or equal to the cutoff diameter.

2. The optical system of claim 1, further comprising means for optically coupling a light source (10) to the probe such that at least some light emitted by the source, at least at the given wavelength, enters or exits the probe through the aperture.

3. The optical system of claim 2, further comprising:

a source (10) of electromagnetic radiation, to be referred to as a "light source";

a scan generator for driving the displacement means such that the probe is displaced in a raster pattern adjacent a portion of a surface of the sample;

transducive means (130) for detecting at least a portion of the light from the light source which enters or exits the probe, and for generating an electrical signal in response to the detected light;

far-field microscopic means (150) for viewing at least a portion of the probe and at least a portion of the object; and

video display means, in signal-receiving relationship to the transducive means, for displaying a two-dimensional image which relates to the amount of detected light at least at some displacements of the probe relative to the sample, the displacements being part of the raster pattern.

4. The optical system of claim 3, wherein the transducive means are adapted to generate analog electrical signals, and the system further comprises means for converting the analog electrical signals to digital signals and transmitting the digital signal to the video display means.

5. The optical system of claim 4, further comprising storage means for digitally recording at least a portion of the digital signals.

6. The optical system of claim 5, further comprising means for digitally processing the digital signals, the digital processing means being in receiving relationship with the analog-to-digital conversion means and in transmissive relationship to the video display means.

7. The optical system of claim 1, further comprising:

a source of electromagnetic radiation capable of stimulating at least a portion of said object to emit fluorescent light, said source optically coupled to the probe such that radiation is transmitted from the source, through the probe, to said object; and

means for detecting at least a portion of fluorescent light emitted by said object.

8. The optical system of claim 1, further comprising:

a source of electromagnetic radiation capable of stimulating an object to emit fluorescent light at least at the given wavelength; and

means for supporting the object relative to the radiation source and the probe such that at least a portion of the radiation emitted by the source impinges on the object and at least a portion of the fluorescent light emitted by the object enters the probe through the optical aperture.

9. The optical system of claim 1, wherein:

the end face is substantially free of overlying opaque material;

the fiber has, at each longitudinal position, a cladding outer diameter;

the portion of the taper region that is overcoated with opaque material includes a part, referred to as the "evanescent region," in which the cladding outer diameter is smaller than the cutoff diameter; and

the aperture substantially coincides with the end face.

10. The optical system of claim 1, wherein:

the end face diameter is approximately equal to the cutoff diameter; and

the probe further comprises an annular layer of opaque material overlying the end face, such that the annular layer surrounds, and thereby defines, the aperture.

11. The optical system of claim 1, wherein:

the ratio of the cutoff diameter to the aperture diameter is denoted $\alpha$;

the metallic mode is the $TE_{11}$ mode;

the taper angle is denoted β;

α is at least about 2 and at most about 8; and the probe has a transmission coefficient, denoted T, which, when expressed in decibels, satisfies the relation

$$T > - (3.68 \, \alpha \, / \tan \beta) - 10$$

12. The optical system of claim 10, wherein the aperture has a center, the end face has a center, and the center of the aperture is displaced from the center of the end face.

13. A method of examining a specimen (40), comprising the steps of producing a magnified image of at least a portion of the specimen; and visually examining the image, the image-producing step comprising:

providing a probe (20) that has an optical aperture (60) smaller in diameter than a given wavelength, situating the probe adjacent a first surface of the specimen such that the aperture lies distant from the first surface by no more than a given wavelength, impinging electromagnetic radiation on the specimen, collecting electromagnetic radiation emitted by the first surface, and detecting at least a portion of the collectcd radiation, the impinging radiation being emanated from the probe and being of a least the given wavelength, or the collected radiation being collected by the probe and being of at least the given wavelength. CHARACTERIZED IN THAT:

a) the probe comprises a portion of an optical fiber having a core (270) and a cladding (260), wherein the fiber has a taper region (240), having a taper angle, in which the cladding has a substantially smooth outer surface, the taper region terminates in a substantially flat end face (250), and the aperture is defined in the end face;

b) at least a portion of the taper region is overcoated with an opaque material (280) such that electromagnetic radiation of the given wavelength will assume the electrical field distribution characteristic of at least a first guided mode of metal waveguides, such a mode to be referred to as a metallic mode, wherein the first metallic mode has associated therewith a cutoff cladding diameter at which the first metallic mode will theoretically change from a propagating to an evanescent mode if the opaque material is an infinitely conductive metal;

c) the cladding outer diameter decreases, through the taper region, at such a rate that guided electromagnetic radiation of the given wavelength that is initially in a dielectric mode characteristic of a cylindrical dielectric waveguide will couple with at least 10% efficiency to the first metallic mode; and

d) the end face has a diameter that is less than or equal to the cutoff diameter.

14. The method of claim 13, wherein the specimen has a second surface, the impinging step comprises impinging radiation on the second surface, and the radiation emitted by the first surface is radiation that has been transmitted through the specimen.

15. The method of claim 13, wherein the impinging step comprises impinging radiation on the first surface, and the collecting step comprises collecting reflected radiation.

16. The method of claim 13, wherein the impinging step comprises impinging radiation on the first surface, the impinged radiation comprises radiation of at least one wavelength capable of exciting fluorescence in at least a portion of the specimen, and the collecting step comprises collecting fluorescent light.

17. A method for patterning a surface, comprising the steps of:

a) providing a workpiece having a surface to be patterned; and

b) impinging light of at least a given wavelength on the surface such that at least a portion of the impinged light is incident from, or reflected or transmitted to, an optical aperture (60), CHARACTERIZED IN THAT the impinging step further comprises:

c) situating a probe (20) adjacent the surface, the probe having an end face (250) and the optical aperture defined in the end face, the distance between the aperture and the surface being at most about one given wavelength; and wherein:

d) the aperture is smaller in diameter than the given wavelength;

e) the probe comprises a portion of an optical fiber having a core (270) and a cladding (260), wherein the fiber has a taper region (240), having a taper angle, in which the cladding has a substantially smooth outer surface, the taper region terminates in a substantially flat end face (250), and the aperture is defined in the end face;

f) at least a portion of the taper region is overcoated with an opaque material (280) such that electromagnetic radiation of the given wavelength will assume the electrical field distribution characteristic of at least a first guided mode of metal waveguides, such a mode to be referred to as a metallic mode, wherein the first metallic mode has associated therewith a cutoff cladding diameter at which the first metallic mode will theoretically change from a propagating to an evanescent mode if the opaque material is an infinitely conductive metal;

g) the cladding outer diameter decreases, through the taper region, at such a rate that guided electromagnetic radiation of the given wavelength that is initially in a dielectric mode characteristic of a cylindrical dielectric waveguide will couple with at least 10% efficiency to the first metallic mode; and

h) the end face has a diameter that is less than or equal to the cutoff diameter.

18. The method of claim 17, wherein the surface comprises a recording medium upon which a bit pattern can be impressed; in the impinging step, light is incident on the medium from the optical aperture; and the impinging step results in a localized physical change in the medium such that an optical signal can be modulated by the physical change, the modulation carrying at least one bit of information.

19. The method of claim 18, wherein the medium is a magnetic medium, and the impinging step results in local heating of the medium above its Curie temperature or above its compensation point, resulting in the formation of a spot where the local magnetization is different from the magnetization of adjacent regions surrounding the spot.

20. The method of claim 19, wherein the impinging step is performed in the presence of an external magnetic field.

21. The method of claim 18, wherein the medium is substantially polycrystalline, and the impinging step results in local heating of a portion of the medium followed by rapid cooling, such that a local, substantially amorphous spot is formed.

22. The method of claim 17, wherein the providing step comprises:

providing a multiplicity of semiconductor wafers, each wafer having a surface to be patterned;

the method further comprises:
a) setting at least one process parameter;
b) processing at least one first wafer according to the process parameter such that a pattern is formed on the surface of the wafer, the pattern having a characteristic dimension;
c) measuring the characteristic dimension of the first wafer;
d) comparing the characteristic dimension to a predetermined range of values;
e) if the characteristic dimension lies outside the predetermined range of values,
changing the process parameter to bring the characteristic dimension within the predetermined range of values;
f) after (e), processing at least a second wafer according to the process parameter;
g) performing, on at least the second wafer, at least one additional step toward completion of the article; and
h) the impinging step comprises, during the measuring step, situating the probe adjacent the patterned surface of the first wafer, impinging light on the surface such that at least a portion of the light is reflected from the surface, the impinging light being emanated from the probe or a portion of the reflected light being collected by the probe, and detecting at least a portion of the reflected light.

23. The method of claim 17, wherein the providing step comprises:

providing a multiplicity of substrates, each substrate having a surface layer of magnetic material to be impressed with a bit pattern;
the method further comprises:

a) setting at least one process parameter;
b) processing at least a first substrate according to the process parameter such that a pattern is formed on the surface of the substrate;
c) sensing the bit pattern in at least the first substrate;
d) comparing the sensed bit pattern to a predetermined bit pattern;
e) if the sensed bit pattern is different from the predetermined bit pattern, changing the process parameter to bring the sensed and predetermined bit patterns into conformity;
f) after (e), processing at least a second substrate according to the process parameter;
g) performing, on at least the second substrate, at least one additional step toward completion of the article; and
h) the impinging step comprises, during the sensing step, situating the probe adjacent the patterned surface of the first wafer, impinging light on the surface such that at least a portion of the light is reflected from the surface, the impinging light being emanated from the probe or a portion of the reflected light being collected by the probe, and detecting at least a portion of the reflected light.

24. The method of claim 17, wherein:

the surface comprises a photoresist;
the impinging step comprises impinging actinic, electromagnetic radiation on the surface from the optical aperture such that a latent image is formed in the photoresist; and
the method further comprises the steps of:
developing the photoresist; and
exposing the workpiece to an etchant such that a pattern is formed in the surface.

25. The method of claim 17, further comprising the step of exposing the surface to a chemically reactive liquid or vapor, and wherein the impinging step comprises impinging actinic, electromagnetic radiation on the surface from the optical aperture such that material is formed by the chemical decomposition of the liquid or vapor, the material depositing on and adhering to the surface, whereby the surface is patterned.

**Patentansprüche**

1. Optisches System umfassend:

eine Sonde (20), von welcher wenigstens ein Abschnitt bei wenigstens einer gegebenen Wellenlänge optisch transparent ist, wobei die Sonde ein entfernt gelegenes Ende hat, in welchem dort eine optische Öffnung (60) definiert ist, deren Durchmesser kleiner als die gegebene Wellenlänge ist, und
eine Einrichtung (30) zum Anordnen oder Versetzen der Sonde relativ zu einem Objekt, dadurch gekennzeichnet, daß

a) die Sonde einen Abschnitt einer optischen Faser mit einem Kern (270) und einer Ummantelung (260) aufweist, wobei die Faser einen sich verjüngenden Abschnitt (240) hat, mit einem Verjüngungswinkel, wobei die Ummantelung eine im wesentlichen glatte äußere Oberfläche hat, wobei der sich verjüngende Bereich in einer im wesentlichen flachen Endfläche (250) endet und die Öffnung in der Endfläche definiert ist,
b) wobei wenigstens ein Abschnitt des sich verjüngenden Bereichs mit einem nichttransparenten Material (280) derart versehen ist, daß elektromagnetische Strahlung der gegebenen Wellenlänge die elektrischen Feldverteilungseigenschaften von wenigstens einem ersten geführten Mode von Metallwellenleitern annimmt, wobei ein derartiger Mode als metallischer Mode bezeichnet wird, wobei dem ersten metallischen Mode ein Ummantelungsgrenzdurchmesser zugeordnet ist, bei welchem der erste metallische Mode sich theoretisch von einem ausbreitenden zu einem evaneszenten Mode ändert, falls das nichttransparente Material unendlich leitfähiges Metall wäre,
c) wobei der äußere Ummantelungsdurchmesser im Verlauf des sich verjüngenden Bereichs so abnimmt, daß geführte elektromagnetische Strahlung der gegebenen Wellenlänge, die anfänglich in einem dielektrischen Mode war, der für einen zylindrischen dielektrischen Wellenleiter charakteristisch ist, mit wenigstens 10 % Wirkungsgrad in den ersten metallsichen Mode gekoppelt wird, und
d) die Endfläche einen Durchmesser hat, der niedriger als oder gleich dem Grenzdurchmesser ist.

2. Optisches System nach Anspruch 1, ferner umfassend eine Einrichtung zum optischen Koppeln einer Lichtquelle (10) an die Sonde derart, daß wenigstens etwas von der Quelle emittiertes Licht bei wenigstens der gegebenen Wellenlänge aus der Sonde durch die Öffnung austritt oder in die Sonde durch die Öffnung eintritt.

3. Optisches System nach Anspruch 2, ferner umfassend: eine Quelle (10) von elektromagnetischer Strahlung, die als "Lichtquelle" bezeichnet wird,

einen Abtastungserzeuger zum Antreiben der Einrichtung zum Anordnen oder Versetzen derart, daß die Sonde benachbart zu einem Abschnitt einer Oberfläche der Probe in einem Rastermuster bewegt oder versetzt wird,
eine Meßgrößen-umformende Einrichtung (130) zum Erfassen wenigstens eines Anteils des Lichts von der Lichtquelle, welches in die Probe eintritt oder aus der Probe austritt, und zum Erzeugen eines elektrischen Signals in Ansprechen auf das erfaßte Licht,
eine Fernfeldmikroskopeinrichtung (150) zum Betrachten wenigstens eines Anteils der Sonde und wenigstens eines Anteils des Objektes, und
eine Videoanzeigeeinrichtung in signalempfangendem Verhältnis zur Meßgrößen-umformenden Einrichtung, um ein zweidimensionales Bild anzuzeigen, welches sich auf die Menge des erfaßten Lichts bei wenigstens einigen Orten oder Versätzen der Sonde relativ zur Probe bezieht, wobei die Orte oder Versätze Teil des Rastermusters sind.

4. Optisches System nach Anspruch 3,

bei welchem die Meßgrößen-umformende Einrichtung analoge elektrische Signale erzeugen kann, und das System ferner eine Einrichtung zum Wandeln des analogen elektrischen Signals in digitale Signale und zum Übertragen des digitalen Signals zur Videoanzeigeeinrichtung umfaßt.

5. Optisches System nach Anspruch 4, ferner umfassend eine Speichereinrichtung zum digitalen Aufzeichnen wenigstens eines Anteils des digitalen Signals.

6. Optisches System nach Anspruch 5, ferner umfassend eine Einrichtung zum digitalen Bearbeiten des digitalen Signals, wobei die digitale Bearbeitungseinrichtung in empfangendem Verhältnis zu der analog-digital-wandelnden Einrichtung und in übertragendem Verhältnis zu der Videoanzeigeeinrichtung steht.

7. Optisches System nach Anspruch 1, ferner umfassend:

eine Quelle elektromagnetischer Strahlung, die wenigstens einen Anteil des Objektes zum Emittieren fluoreszenten Lichtes stimulieren kann, wobei die Quelle optisch an die Sonde derart gekoppelt ist, daß die Strahlung von der Quelle durch die Sonde zum Objekt übertragen wird, und
eine Einrichtung zum Erfassen wenigstens eines Anteils von durch das Objekt emittiertem fluoreszenten Licht.

8. Optisches System nach Anspruch 1, ferner umfassend:

eine Quelle elektromagnetischer Strahlung, die ein Objekt zum Emittieren fluoreszenten Lichts bei wenigstens der gegebenen Wellenlänge stimulieren kann, und
eine Einrichtung zum Halten des Objekts relativ zu der Strahlungsquelle und der Sonde derart, daß wenigstens ein Anteil der durch die Quelle emittierten Strahlung auf das Objekt auftrifft und wenigstens ein Anteil des durch das Objekt emittierten, fluoreszenten Lichts durch die optische Öffnung in die Sonde tritt.

9. Optisches System nach Anspruch 1,

bei welchem die Endfläche im wesentlichen frei von über dieser liegendem nichttransparentem Material ist,
wobei die Faser an jeder Stelle in Längsrichtung einen äußeren Ummantelungsdurchmesser hat, wobei der Abschnitt des sich verjüngenden Bereichs, der mit nichttransparentem Material überzogen ist, einen Teil umfaßt, der als der "evaneszenter" Bereich bezeichnet wird, in welchem der äußere Ummantelungsdurchmesser geringer als der Grenzdurchmesser ist, und wobei die Öffnung im wesentlichen mit der Endfläche übereinstimmt.

10. Optisches System nach Anspruch 1, bei welchem der Endflächendurchmesser ungefähr gleich dem Grenzdurchmesser ist und die Sonde ferner eine ringförmige, über der Endfläche liegende Schicht derart umfaßt, daß die ringförmige Schicht die Öffnung umgibt und diese hierdurch definiert.

11. Optisches System nach Anspruch 1, bei welchem das Verhältnis des Grenzdurchmessers zum Öffnungsdurchmesser als $\alpha$ bezeichnet wird,

der metallische Mode der $TE_{11}$-Mode ist, der Verjüngungswinkel mit $\beta$ bezeichnet wird, $\alpha$ wenigstens 2 und höchstens 8 beträgt und die Sonde einen mit T bezeichneten Transmissionskoeffizienten hat, welcher bei Darstellung in Dezibel die Gleichung erfüllt:
$$T > - (3{,}68\ \alpha/\tan \beta) - 10\ .$$

12. Optisches System nach Anspruch 10, bei welchem die Öffnung eine Mitte hat, die Endfläche eine Mitte hat und die Mitte der Öffnung von der Mitte der Endfläche versetzt ist.

13. Verfahren zum Untersuchen einer Probe (40) umfassend die Schritte

des Erzeugens eines vergrößerten Bildes von wenigstens einem Teil der Probe und
des visuellen Untersuchens des Bildes, wobei der bilderzeugende Schritt umfaßt:
Bereitstellen einer Sonde (20), die eine optische Öffnung (60) aufweist, welche im Durchmesser kleiner als eine vorgegebene Wellenlänge ist,
Anordnen der Sonde benachbart zu einer ersten Oberfläche der Probe derart, daß die Öffnung von der ersten Oberfläche um nicht mehr als die gegebene Wellenlänge beabstandet ist,
Auftreffenlassen von elektromagnetischer Strahlung auf die Probe,
Sammeln von durch die erste Oberfläche emittierter elektromagnetischer Strahlung und
Erfassen von wenigstens einem Anteil der gesammelten Strahlung, wobei die auftreffende Strahlung von der Sonde ausgestrahlt ist und wenigstens die gegebene Wellenlänge enthält, oder die gesammelte Strahlung durch die Sonde gesammelt wird und wenigstens die vorgegebene Wellenlänge umfaßt,
dadurch gekennzeichnet, daß

a) die Sonde einen Abschnitt einer optischen Faser mit einem Kern (270) und einer Ummantelung (260) hat, wobei die Faser einen sich verjüngenden Bereich (240) aufweist, der einen Verjüngungswinkel hat, wobei die Ummantelung eine im wesentlichen glatte äußere Oberfläche hat, wobei der sich verjüngende Bereich in einer im wesentlichen flachen Endfläche (250) endet und die Öffnung in der Endfläche definiert ist,

b) wobei wenigstens ein Abschnitt des sich verjüngenden Bereichs mit einem nichttransparenten Material (280) derart überzogen ist, daß die elektromagnetische Strahlung der gegebenen Wellenlänge die elektrischen Feldverteilungseigenschaften von wenigstens einer ersten geführten Mode von Metallwellenleitern annimmt, wobei der ersten metallischen Mode ein Ummantelungsgrenzdurchmesser zugeordnet ist, bei welchem der metallische Mode theoretisch sich von einem ausbreitenden zu einem evaneszenten Moden ändert, falls das nichttransparente Material unendlich leitfähiges Metall ist,

c) wobei der Ummantelungsdurchmesser im Verlauf des sich verjüngenden Bereichs mit so abnimmt, daß die geführte elektromagnetische Strahlung der gegebenen Wellenlänge, die anfänglich in einer dielektrischen Mode ist, die für einen zylindrischen dielektrischen Wellenleiter charakteristisch ist, mit wenigstens 10 % Wirkungsgrad in den ersten metallischen Mode gekoppelt wird, und

d) wobei die Endfläche einen Durchmesser hat, der geringer als oder gleich dem Grenzdurchmesser ist.

14. Verfahren nach Anspruch 13, bei welchem die Probe eine zweite Oberfläche hat, wobei der Schritt des Auftreffens das Auftreffen von Strahlung auf die zweite Oberfläche umfaßt und die durch die erste Oberfläche emittierte Strahlung Strahlung ist, welche durch die Probe übertragen wurde.

15. Verfahren nach Anspruch 13, bei welchem der Schritt des Auftreffens das Auftreffen von Strahlung auf die erste Oberfläche umfaßt und der Schritt des Sammelns das Sammeln von reflektierter Strahlung umfaßt.

16. Verfahren nach Anspruch 13, bei welchem der Schritt des Auftreffens das Auftreffen von Strahlung auf die ersten Oberfläche umfaßt, wobei die auftreffende Strahlung Strahlung bei wenigstens einer Wellenlänge umfaßt, welche Fluoreszenz bei wenigstens einem Teil der Probe anregen kann und der Schritt des Sammelns das Sammeln von fluoreszentem Licht umfaßt.

17. Verfahren zum Bemustern einer Oberfläche, umfassend die Schritte des:

a) Bereitstellens eines Werkstücks mit einer zu bemusternden Oberfläche und

b) des Auftreffenlassens von Licht mit wenigstens einer gegebenen Wellenlänge auf der Oberfläche derart, daß wenigstens ein Teil des auftreffenden Lichtes von einer optischen Öffnung (60) ausgeht, reflektiert wird oder zu dieser übertragen wird, dadurch gekennzeichnet, daß der Schritt des Auftreffens ferner umfaßt:

c) des Anordnens einer Sonde (20) benachbart zur Oberfläche, wobei die Sonde eine Endfläche (250) aufweist und die optische Öffnung in der Endfläche definiert ist, wobei der Abstand zwischen der Öffnung und der Oberfläche höchstens eine gegebene Wellenlänge beträgt, und wobei

d) die Öffnung von geringerem Durchmesser als die gegebene Wellenlänge ist,

e) die Sonde einen Teil einer optischen Faser mit einem Kern (270) und einer Ummantelung (260) umfaßt, wobei die Faser einen sich verjüngenden Bereich (270) aufweist mit einem Verjüngungswinkel, wobei die Ummantelung eine im wesentlichen glatte äußere Oberfläche hat, wobei der sich verjüngende Bereich in einer im wesentlichen flachen Endfläche (250) endet und die Öffnung in der Endfläche definiert ist.,

f) wobei wenigstens ein Anteil des sich verjüngenden Bereichs mit einem nichttransparenten Material (280) derart überzogen ist, daß elektromagnetische Strahlung der gegebenen Wellenlänge die elektrischen Feldverteilungscharakteristiken von wenigstens einem ersten geführten Mode von Metallwellenleitern annimmt, wobei ein derartiger Mode als metallischer Mode bezeichnet wird, wobei dem ersten metallischen Mode ein Ummantelungsgrenzdurchmesser zugeordnet ist, bei welchem sich der erste metallische Mode theoretisch von einem ausbreitenden zu einem evaneszenten Mode ändert, falls das nichttransparente Material ein unendlich leitfähiges Metall ist,

g) wobei der äußere Ummantelungsdurchmesser im Verlauf des sich verjüngenden Bereichs so abnimmt, daß geführte elektromagnetische Strahlung der gegebenen Wellenlänge, die anfänglich in einem dielektrischen Mode ist, der für einen zylindrischen dielektrischen Wellenleiter charakteristisch ist, mit wenigstens 10 % Wirkungsgrad in den ersten metallischen Mode eingekoppelt wird, und

h) die Endfläche einen Durchmesser hat, der geringer oder gleich dem Grenzdurchmesser ist.

18. Verfahren nach Anspruch 17,
bei welchem die Oberfläche ein Aufzeichnungsmedium umfaßt, welchem ein Bitmuster aufprägbar ist, wobei bei dem Schritt des Auftreffens von der optischen Öffnung Licht auf das Medium auftrifft und der Schritt des Auftreffens zu einer örtlich festgelegten, physikalischen Änderung im Medium derart führt, daß ein optisches Signal durch die physikalische Änderung modulierbar ist, wobei die Modulation wenigstens ein Informationsbit trägt.

19. Verfahren nach Anspruch 18,
bei welchem das Medium ein magnetisches Medium ist und der Schritt des Auftreffens zu einem lokalen Erwärmen des Mediums über seine Curie-Temperatur oder über seinen Kompensationspunkt führt, welches zur Ausbildung eines Punktes führt, an welchem die örtliche Magnetisierung von der Magnetisierung den Punkt umgebender benachbarter Bereiche verschieden ist.

20. Verfahren nach Anspruch 19,
bei welchem der Schritt des Auftreffens in Anwesenheit eines externen magnetischen Feldes durchgeführt wird.

21. Verfahren nach Anspruch 18,
bei welchem das Medium im wesentlichen polykristallin ist und der Schritt des Auftreffens zu einer lokalen Erwärmung eines Anteils des Mediums führt, gefolgt von schnellem Kühlen, derart, daß ein örtlicher, im wesentlichen amorpher Punkt gebildet wird.

22. Verfahren nach Anspruch 17,
bei welchem der Schritt des Bereitstellens umfaßt: das Bereitstellen einer Vielzahl von Halbleiterwafern, wobei jeder Wafer eine zu bemusternde Oberfläche hat, wobei das Verfahren ferner umfaßt:

a) Setzen wenigstens eines Verfahrensparameters,

b) Bearbeiten von wenigstens einem ersten Wafer gemäß dem Verfahrensparameter derart, daß ein Muster an der Oberfläche des Wafers ausgebildet wird, wobei das Muster eine charakteristische Abmessung hat,

c) Messen der charakteristischen Abmessung des ersten Wafers,

d) Vergleichen der charakteristischen Abmessung mit einem vorbestimmten Bereich von Werten,

e) falls die charakteristische Abmessung außerhalb des vorbestimmten Bereichs von Werten liegt, Ändern des Verfahrensparameters, um die charakteristische Abmessung innerhalb des vorbestimmten Bereichs von Werten zu bringen,

f) nach e) Bearbeiten wenigstens eines zweiten Wafers gemäß dem Verfahrensparameter,

g) Durchführen an wenigstens dem zweiten Wafer wenigstens einen zusätzlichen Schritt zur Vervollständigung des Gegenstandes, und

h) wobei der Schritt des Auftreffens während des Schrittes des Messens, das Anordnen der Sonde benachbart zur bemusterten Oberfläche des ersten Wafers, das Auftreffenlassen von Licht auf die Oberfläche derart, daß wenigstens ein Teil des Lichtes von der Oberfläche reflektiert wird, umfaßt, wobei das auftreffende Licht von der Sonde ausgeht oder ein Anteil des reflektierten Lichts durch die Sonde gesammelt wird, und das Erfassen wenigstens einen Teil des reflektierten Lichtes umfaßt.

23. Verfahren nach Anspruch 17,
bei welchem der Schritt des Bereitstellens umfaßt: das Bereitstellen einer Vielzahl von Substraten, wobei jedes Substrat eine zu Oberflächenschicht aus magnetischem Material hat, in welche ein Bitmuster einzuprägen ist, wobei das Verfahren ferner umfaßt:

a) Setzen wenigstens eines Verfahrensparameters,

b) Bearbeiten von wenigstens einem ersten Substrat gemäß dem Verfahrensparameter derart, daß ein Muster an der Oberfläche des Substrates gebildet wird

c) Abfühlen des Bitmusters in wenigstens dem ersten Substrat,

d) Vergleichen des abgefühlten Bitmusters mit einem vorbestimmten Bitmuster,

e) falls das abgefühlte Bitmuster von dem vorbestimmten Bitmuster verschieden ist, Ändern des Verfahrensparameters, um das abgefühlte und das vorbestimmte Bitmuster in Übereinstimmung zu bringen,

f) nach (e) Bearbeiten wenigstens eines zweiten Substrates gemäß dem Verfahrensparameter,

g) Durchführen an wenigstens dem zweiten Substrat wenigstens eines weiteren Schritts zur Verfollständigung des Gegenstands,

h) wobei der Schritt des Auftreffens umfaßt, während des Schrittes des Abfühlens, das Anordnen der Sonde benachbart zur bemusterten Oberfläche des ersten Wafers, das Auftreffenlassen von Licht auf die Oberfläche, derart, daß wenigstens ein Teil des Lichtes von der Oberfläche reflektiert wird, wobei das auftreffende Licht von der Sonde ausging oder ein Teil des reflektierten Lichts durch die Sonde gesammelt wird, und das Erfassen wenigstens eines Teils des reflektierten Lichts.

24. Verfahren nach Anspruch 17, bei welchem die Oberfläche einen Photoresist umfaßt,

der Schritt des Auftreffens das Auftreffen von aktinischer elektromagnetischer Strahlung von der optischen Öffnung auf der Oberfläche derart, daß ein latentes Bild im Photoresist ausgebildet wird, umfaßt, und
das Verfahren ferner die Schritte umfaßt:
des Entwickelns des Photoresistes und das Einwirkenlassen eines Ätzmittels auf das Werkstück, derart, daß eim Muster in der Oberfläche ausgebildet wird.

25. Verfahren nach Anspruch 17,

ferner umfassend den Schritt des Einwirkenlassens einer chemisch reaktiven Flüssigkeit oder Dampfes auf die Oberfläche, und wobei der Schritt des Auftreffens das Auftreffen aktinischer elektromagnetischer Strahlung von der optischen Öffnung auf die Oberfläche derart umfaßt, daß durch die chemische Zersetzung der Flüssigkeit oder des Dampfes Material gebildet wird,
wobei das Material sich an der Oberfläche abscheidet und an der Oberfläche anhaftet, wobei die Oberfläche bemusters wird.

**Revendications**

1. Un système optique, comprenant :

une sonde (20) dont au moins une partie a une propriété de transmission optique, au moins à une longueur d'onde donnée, la sonde ayant une extrémité distale dans laquelle est définie une ouverture optique (60) d'un diamètre inférieur à la longueur d'onde donnée; et
des moyens (30) pour déplacer la sonde par rapport à un objet,
CARACTERISE EN CE QUE

a) la sonde comprend une partie d'une fibre optique ayant un coeur (270) et une gaine (260), et la fibre comporte une région tronconique (240), ayant un angle de cône, dans laquelle la gaine a une surface extérieure pratiquement lisse, la région tronconique se termine par une face d'extrémité pratiquement plane (250), et l'ouverture est définie dans la face d'extrémité;

b) au moins une partie de la région tronconique est revêtue sur le dessus d'une matière opaque (280), de façon que le rayonnement électromagnétique de la longueur d'onde donnée prenne la distribution de champ électrique caractéristique d'au moins un premier mode guidé de guides d'ondes métalliques, un tel mode étant appelé un mode métallique, le premier mode métallique étant associé à un diamètre de gaine de coupure auquel le premier mode métallique se transformera théoriquement d'un mode à propagation en un mode évanescent si le matériau opaque est un métal ayant une conductivité infinie;
c) le diamètre extérieur de la gaine diminue, dans la région tronconique, à une vitesse telle qu'un rayonnement électromagnétique guidé de la longueur d'onde donnée qui est initialement dans un mode diélectrique caractéristique d'un guide d'ondes diélectrique cylindrique, sera couplé avec un rendement d'au moins 10% vers le premier mode métallique; et
d) la face d'extrémité a un diamètre qui est inférieur ou égal au diamètre de coupure.

2. Le système optique de la revendication 1, comprenant en outre des moyens pour coupler de façon optique une source de lumière (10) à la sonde, de façon qu'au moins une partie de la lumière qui est émise par la source, au moins à la longueur d'onde donnée, entre dans la sonde ou sorte de celle-ci à travers l'ouverture.

3. Le système optique de la revendication 2, comprenant en outre :

une source (10) de rayonnement électromagnétique, que l'on appelle une "source de lumière";
un générateur de balayage pour entraîner les moyens de déplacement de façon que la sonde soit déplacée en une configuration de balayage par trame dans une position adjacente à une partie d'une surface de l'échantillon;
des moyens transducteurs (130) pour détecter au moins une partie de la lumière provenant de la source de lumière qui entre dans la sonde ou sort de celle-ci, et pour générer un signal électrique en réponse à la lumière détectée;
des moyens (150) ayant une fonction de microscopie en champ lointain, pour observer au moins une partie de la sonde et au moins une partie de l'objet; et
des moyens de visualisation vidéo, en relation de réception de signal avec les moyens transducteurs, pour visualiser une image bidimensionnelle qui concerne la quantité de lumière détectée, au moins pour certains déplacements de la sonde par rapport à l'échantillon, les déplacements faisant partie de la configuration de trame.

4. Le système optique de la revendication 3, dans lequel les moyens transducteurs sont adaptés pour générer des signaux électriques analogiques, et le système comprend en outre des moyens pour convertir les signaux électriques analogiques en signaux numériques et pour transmettre les signaux numériques aux moyens de visualisation vidéo.

5. Le système optique de la revendication 4, comprenant en outre des moyens d'enregistrement pour enregistrer de façon numérique au moins une partie des signaux numériques.

6. Le système optique de la revendication 5, comprenant en outre des moyens pour traiter de façon numérique les signaux numériques, les moyens de traitement numériques étant en relation de réception avec les moyens de conversion analogique-numérique et en relation de transmission avec les moyens de visualisation vidéo.

7. Le système optique de la revendication 1, comprenant en outre :

une source de rayonnement électromagnétique capable de stimuler au moins une partie de l'objet pour qu'elle émette de la lumière de fluorescence, cette source étant en couplage optique avec la sonde de manière que ce rayonnement soit transmis à partir de la source, à travers la sonde, vers l'objet; et
des moyens pour détecter au moins une partie de la lumière de fluorescence qui est émise par l'objet.

8. Le système optique de la revendication 1, comprenant en outre :

une source de rayonnement électromagnétique capable de stimuler un objet pour qu'il émette de la lumière de fluorescence au moins à la longueur d'onde donnée; et
des moyens pour supporter l'objet par rapport à la source de rayonnement et à la sonde de façon qu'au moins une partie du rayonnement qui est émis par la source tombe sur l'objet et au moins une partie de la lumière de fluorescence qui est émise par l'objet entre dans la sonde à travers l'ouverture optique.

9. Le système optique de la revendication 1, dans lequel :

la face d'extrémité est pratiquement dépourvue de matière de recouvrement opaque;
la fibre présente, à chaque position longitudinale, un diamètre extérieur de gaine;
la partie de la région tronconique qui est revêtue sur le dessus d'une matière opaque comprend une partie, que l'on appelle la "région évanescente", dans laquelle le diamètre extérieur de gaine est inférieur au diamètre de coupure; et
l'ouverture coïncide pratiquement avec la face d'extrémité.

10. Le système optique de la revendication 1, dans lequel :

le diamètre de la face d'extrémité est approximativement égal au diamètre de coupure; et
la sonde comprend en outre une couche annulaire de matière opaque recouvrant la face d'extrémité, de façon que la couche annulaire entoure l'ouverture, et définisse ainsi cette dernière.

11. Le système optique de la revendication 1, dans lequel :

le rapport entre le diamètre de coupure et le diamètre de l'ouverture est désigné par $\alpha$ ;
le mode métallique est le mode $TE_{11}$;
l'angle de cône est désigné par $\beta$ ;
$\alpha$ est au moins approximativement égal à 2 et au plus approximativement égal à 8; et
la sonde a un coefficient de transmission, désigné par T, qui, exprimé en décibels, satisfait la relation :

$$T > - (3,68 \ \alpha/\tan \beta) - 10$$

12. Le système optique de la revendication 10, dans lequel l'ouverture a un centre, la face d'extrémité a un centre, et le centre de l'ouverture est décalé par rapport au centre de la face d'extrémité.

13. Un procédé pour examiner un échantillon (40), comprenant les étapes qui consistent à produire une image agrandie d'au moins une partie de l'échantillon; et à examiner visuellement l'image, l'étape de production d'image comprenant les opérations suivantes :

on fournit une sonde (20) qui a une ouverture optique (60) de diamètre inférieur à une longueur d'onde donnée, on dispose la sonde dans une position adjacente à une première surface de l'échantillon, de façon que l'ouverture se trouve à une distance de la première surface qui n'est pas supérieure à une longueur d'onde donnée, on projette un rayonnement électromagnétique sur l'échantillon, on collecte le rayonnement électromagnétique qui est émis par la première surface, et on détecte au moins une partie du rayonnement collecté, le rayonnement qui est projeté provenant de la sonde et ayant au moins la longueur d'onde donnée, ou bien le rayonnement collecté étant collecté par la sonde et ayant au moins la longueur d'onde donnée, CARACTERISE EN CE QUE :

a) la sonde comprend une partie d'une fibre optique ayant un coeur (270) et une gaine (260), et la fibre a une une région tronconique (240), ayant un angle de cône, dans laquelle la gaine a une surface extérieure pratiquement lisse, la région tronconique se termine par une face d'extrémité pratiquement plane (250), et l'ouverture est définie dans la face d'extrémité;

b) au moins une partie de la région tronconique est revêtue sur le dessus d'une matière opaque (280), de façon que le rayonnement électromagnétique de la longueur d'onde donnée prenne la distribution de champ électrique caractéristique d'au moins un premier mode guidé de guides d'ondes métalliques, un tel mode étant appelé un mode métallique, et le premier mode métallique est associé à un diamètre de gaine de coupure auquel le premier mode métallique se transformera théoriquement d'un mode à propagation en un mode évanescent si la matière opaque est un métal ayant une conductivité infinie;

c) le diamètre extérieur de gaine diminue, dans la région tronconique, à une vitesse telle que le rayonnement électromagnétique guidé de la longueur d'onde donnée qui est initialement dans un mode diélectrique caractéristique d'un guide d'ondes diélectrique cylindrique, sera couplé avec un rendement d'au moins 10% vers le premier mode métallique; et

d) la face d'extrémité a un diamètre qui est inférieur ou égal au diamètre de coupure.

14. Le procédé de la revendication 13, dans lequel l'échantillon a une seconde surface, l'étape de projection comprend la projection d'un rayonnement sur la seconde surface, et le rayonnement qui est émis par la première surface est un rayonnement qui a été transmis à travers l'échantillon.

15. Le procédé de la revendication 13, dans lequel l'étape de projection comprend la projection d'un rayonnement sur la première surface, et l'étape de collecte comprend la collecte du rayonnement réfléchi.

16. Le procédé de la revendication 13, dans lequel l'étape de projection comprend la projection d'un rayonnement sur la première surface, le rayonnement projeté comprend un rayonnement d'au moins une longueur d'onde capable d'exciter une fluorescence dans au moins une partie de l'échantillon, et l'étape de collecte comprend la collecte de la lumière de fluorescence.

17. Un procédé pour former un motif sur une surface, comprenant les étapes suivantes :

a) on fournit un objet ayant une surface sur laquelle on doit former un motif; et

b) on projette sur la surface de la lumière ayant au moins une longueur d'onde donnée, de façon qu'au moins une partie de la lumière projetée provienne d'une ouverture optique (60), ou soit réfléchie ou transmise vers celle-ci, CARACTERISE EN CE QUE l'étape de projection comprend en outre l'opération suivante :

c) on dispose une sonde (20) dans une position adjacente à la surface, la sonde ayant une face d'extrémité (250) et l'ouverture optique étant définie dans la face d'extrémité, la distance entre l'ouverture et la surface étant au plus d'environ une longueur d'onde donnée; et dans lequel :

d) l'ouverture a un diamètre inférieur à la longueur d'onde donnée;

e) la sonde comprend une partie d'une fibre optique ayant un coeur (270) et une gaine (260), la fibre ayant une région tronconique (240), ayant un angle de cône, dans laquelle la gaine a une surface extérieure pratiquement lisse, la région tronconique se termine par une face d'extrémité pratiquement plane (250), et l'ouverture est définie dans la face d'extrémité;

f) au moins une partie de la région tronconique est revêtue sur le dessus d'une matière opaque (280), de façon que le rayonnement électromagnétique de la longueur d'onde donnée prenne la distribution de champ électrique caractéristique d'au moins un premier mode guidé de guides d'ondes métalliques, un tel mode étant appelé un mode métallique, et le premier mode métallique est associé à un diamètre de gaine de coupure auquel le premier mode métallique se transformera théoriquement d'un mode à propagation en un mode évanescent si la matière opaque est un métal ayant une conductivité infinie;

g) le diamètre extérieur de gaine diminue, dans la région tronconique, à une vitesse telle que le rayonnement électromagnétique guidé de la longueur d'onde donnée qui est initialement dans un mode diélectrique caractéristique d'un guide d'ondes diélectrique cylindrique, sera

19

couplé avec un rendement d'au moins 10% vers le premier mode métallique; et

h) la face d'extrémité a un diamètre qui est inférieur ou égal au diamètre de coupure.

**18.** Le procédé de la revendication 17, dans lequel la surface comprend un support d'enregistrement auquel on peut appliquer un motif consistant en une configuration de bits; au cours de l'étape de projection, le support d'enregistrement reçoit de la lumière provenant de l'ouverture optique; et l'étape de projection occasionne un changement physique localisé dans le support, d'une manière telle qu'un signal optique puisse être modulé par le changement physique, la modulation acheminant au moins un bit d'information.

**19.** Le procédé de la revendication 18, dans lequel le support est un support magnétique et l'étape de projection occasionne un échauffement local du support au-dessus de sa température de Curie ou au-dessus de son point de compensation, ce qui conduit à la formation d'une petite zone dans laquelle la magnétisation locale est différente de la magnétisation de régions adjacentes entourant la petite zone.

**20.** Le procédé de la revendication 19, dans lequel l'étape de projection est effectuée en présence d'un champ magnétique externe.

**21.** Le procédé de la revendication 18, dans lequel le support est pratiquement polycristallin, et l'étape de projection occasionne un échauffement local d'une partie du support suivi par un refroidissement rapide, de façon à former une petite zone locale, pratiquement amorphe.

**22.** Le procédé de la revendication 17, dans lequel l'étape de fourniture d'un objet comprend :

la fourniture d'une multiplicité de tranches de semiconducteur, chaque tranche ayant une surface sur laquelle un motif doit être formé;

le procédé comprenant en outre les étapes suivantes :

a) on fixe au moins un paramètre de processus;

b) on traite au moins une première tranche conformément au paramètre de processus de façon à former un motif sur la surface de la tranche, le motif ayant une dimension caractéristique;

c) on mesure la dimension caractéristique de la première tranche;

d) on compare la dimension caractéristique à une plage de valeurs prédéterminée;

e) si la dimension caractéristique se trouve à l'extérieur de la plage de valeurs prédéterminée, on change le paramètre de processus pour amener la dimension caractéristique à l'intérieur de la plage de valeurs prédéterminée;

f) après l'étape (e), on traite au moins une seconde tranche conformément au paramètre de processus;

g) on effectue, au moins sur la seconde tranche, au moins une étape supplémentaire vers l'achèvement de l'article; et

h) l'étape de projection comprend, pendant l'étape de mesure, la mise en place de la sonde dans une position adjacente à la surface de la première tranche sur laquelle un motif est formé, la projection de lumière sur la surface de façon qu'au moins une partie de la lumière soit réfléchie par la surface, la lumière projetée provenant de la sonde, ou bien une partie de la lumière réfléchie étant collectée par la sonde, et la détection d'au moins une partie de la lumière réfléchie.

**23.** Le procédé de la revendication 17, dans lequel l'étape de fourniture d'un objet comprend :

la fourniture d'une multiplicité de substrats, chaque substrat ayant une couche de surface en un matériau magnétique à laquelle on doit appliquer un motif consistant en une configuration de bits;

le procédé comprenant en outre les étapes suivantes :

a) on fixe au moins un paramètre de processus;

b) on traite au moins un premier substrat conformément au paramètre de processus, de façon à former un motif sur la surface du substrat;

c) on détecte le motif de bits au moins dans le premier substrat;

d) on compare le motif de bits détecté avec un motif de bits prédéterminé;

e) si le motif de bits détecté diffère du motif de bits prédéterminé, on change le paramètre de processus pour mettre en conformité les motifs de bits détecté et prédéterminé;

f) après l'étape (e), on traite au moins un second substrat conformément au paramètre de processus;

g) on effectue, au moins sur le second substrat, au moins une étape supplémentaire vers l'achèvement de l'article; et

h) l'étape de projection comprend, pendant l'étape de détection, la mise en place de la sonde dans une position adjacente à la surface de la première tranche sur laquelle un motif est formé, la projection de lumière sur la surface de façon qu'au moins une partie de la lumière soit réfléchie par la surface, la lumière qui est projetée provenant de la sonde, ou bien une partie de la lumière réfléchie étant collectée par la sonde, et la détection d'au moins une partie de la lumière réfléchie.

24. Le procédé de la revendication 17, dans lequel :

la surface comprend une résine photosensible; l'étape de projection comprend la projection d'un rayonnement électromagnétique actinique sur la surface, à partir de l'ouverture optique, de façon qu'une image latente soit formée dans la résine photosensible; et
le procédé comprend en outre les étapes suivantes :
le développement de la résine photosensible; et l'exposition de l'objet à un agent d'attaque, de façon à former un motif dans la surface.

25. Le procédé de la revendication 17, comprenant en outre l'étape d'exposition de la surface à un liquide ou une vapeur chimiquement réactif, et dans lequel l'étape de projection comprend la projection d'un rayonnement électromagnétique actinique sur la surface, à partir de l'ouverture optique, de façon qu'une matière soit formée par la décomposition chimiqe du liquide ou de la vapeur, cette matière se déposant sur la surface et adhérant à celle-ci, ce qui a pour effet de définir un motif sur la surface.

FIG. 1

FIG. 2

FIG. 3
(PRIOR ART)

210

190

200

FIG. 4
(PRIOR ART)

220

FIG. 5

270

230

260

240

280

250

β

FIG. 6

FIG. 7

230

280

300

FIG. 8

230

280

300

FIG. 9

```
                          ┌─────────────┐ ⌐A
                          │   PROVIDE   │
                          │   WAFERS    │
                          └──────┬──────┘
                                 │
                          ┌──────▼──────┐ ⌐B
                          │     SET     │
                          │  PARAMETER  │
                          └──────┬──────┘
                                 │
                          ┌──────▼──────┐ ⌐C
                    ┌────▶│   PROCESS   │
                    │     │    WAFER    │
                    │     └──────┬──────┘
                    │  ┌─────────┼──────────────┐ ⌐D
                    │  │ MEASURE │              │
                    │  │ PATTERN │              │
                    │  │  ┌──────▼──────┐ ⌐I    │
                    │  │  │    PLACE    │       │
                    │  │  │    PROBE    │       │
                    │  │  └──────┬──────┘       │
                    │  │         │              │
                    │  │  ┌──────▼──────┐ ⌐J    │
                    │  │  │   IMPINGE   │       │
                    │  │  │    LIGHT    │       │
                    │  │  └──────┬──────┘       │
                    │  │         │              │
                    │  │  ┌──────▼──────┐ ⌐K    │
                    │  │  │   DETECT    │       │
                    │  │  │    LIGHT    │       │
                    │  │  └──────┬──────┘       │
                    │  └─────────┼──────────────┘
                    │            │
                    │     ┌──────▼──────┐ ⌐E
                    │     │   COMPARE   │
                    │     └──────┬──────┘
                    │            │
   ┌─────────────┐  │           NO      ⟋DIMENSION⟍  ⌐H
   │   CHANGE    │◀─┘◀────────────⟨ ACCEPTABLE? ⟩
   │  PARAMETER  │                 ⟍         ⟋
   └─────────────┘                     │
                                      YES
                          ┌──────▼──────┐ ⌐F
                          │   PROCESS   │
                          │    WAFER    │
                          └──────┬──────┘
                                 │
                          ┌──────▼──────────┐ ⌐G
                          │    PERFORM      │
                          │ ADDITIONAL STEP │
                          └─────────────────┘
```